(19) Europäisches Patentamt
European Patent Office
Office européen des brevets

(11) **EP 2 711 326 A1**

(12) **EUROPÄISCHE PATENTANMELDUNG**

(43) Veröffentlichungstag:
26.03.2014 Patentblatt 2014/13

(51) Int Cl.:
***B66C 19/00*** *(2006.01)*

(21) Anmeldenummer: 13004324.3

(22) Anmeldetag: 03.09.2013

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **25.09.2012 DE 102012018850**

(71) Anmelder: **Identec Solutions AG**
**6890 Lustenau (AT)**

(72) Erfinder: **Bachmann, Dieter**
**6800 Feldkirch (DE)**

(74) Vertreter: **Riebling, Peter**
**Patentanwalt**
**Postfach 31 60**
**88113 Lindau/B. (DE)**

(54) **Verfahren und Vorrichtung zur Verfolgung von Containern, die unter Zuhilfenahme einer Zugmaschine in einem Hafenterminal transportiert werden**

(57)  Verfahren zur Verfolgung mindestens eines Containers (1a, 1b), welcher von einem Anlandeplatz eines Hafenterminals (2) und einem dort angeordneten Containerkran (5a) auf mindestens einen Anhänger (8a, 8b) einer Zugmaschine (3) aufgeladen und zu einem Abladeplatz (6) verbracht wird und dort mit einem weiteren Containerkran (5b) auf einem Absetzort (15) abgestellt wird, wobei zur Ermittlung der Position des auf- oder abgeladenen Containers (1a, 1b) auf einem der Anhänger (8a, 8b, 9a, 9b) der Zugmaschine (3) eine Distanzermittlung (13, 13a, 13b) zwischen der Zugmaschine (3) und dem Containerkran (5a, 5b) stattfindet.

Fig. 1

## Beschreibung

Die Erfindung betrifft ein Verfahren und eine Vorrichtung zur Verfolgung von Containern. Der Container wird hierbei in einem Containerterminal ausgehend von einem Anlandeplatz eines Schiffes mit Hilfe eines dort angeordneten Containerkrans auf ein Gespann geladen, mit einer Zugmaschine zu einem Abladeplatz (Yard) transportiert und dort mit einem zugeordneten Kran auf einer Lagerfläche abgestellt.

Bei der Anlandung von Containern in einem Hafenterminal besteht das Problem, dass der vom Schiff abgeladene Container mit einem hafenseitigen Kran abgeladen und auf einer Aufstellfläche abgestellt werden sollen. Dieser vom Containerkran bewegte Container wird auf eine Zugmaschine mit Anhängern abgesetzt, wobei hier das Problem besteht, dass ein oder mehrere Container auf die an die Zugmaschine gekoppelten Anhängerplattformen aufgeladen werden können. Im Fall der Kombination von 20- oder 40-Fuß-Containern kann es deshalb vorkommen, dass auf einer Anhängerplattform ein 40- oder zwei 20-Fuß-Container aufgeladen werden. Es ist also nicht sichergestellt, in welcher Anzahl und Type von Containern die Zugmaschine mit dem daran anhängenden Anhänger beladen wird.

Der Einfachheit halber wird in der folgenden Beschreibung von Anhängerplattformen der Zugmaschine ausgegangen, da derartige Zugfahrzeuge in Containerterminals üblicherweise lediglich aus einem Triebkopf mit einem oder mehreren Anhängern bestehen.

Der einfachste Fall ist natürlich, dass der Triebkopf lediglich mit einem einzigen Anhänger verbunden ist, wobei dieser Anhänger durch Anhängen eines zweiten Anhängers in seiner Länge und seiner Ladekapazität erweitert werden kann.

In der Vergangenheit wurde die Zuordnung von Container zu Gespann entweder manuell oder mit Kamerabasierten Systemen durchgeführt. Durch den Einsatz von Kameras im rauen Umfeld und bei unterschiedlichen Witterungen ergibt sich eine begrenzte Zuverlässigkeit des Systems. Eine automatische Zuordnung von Container zu Ladeposition ohne die Verwendung von Kameras war bisher nicht möglich.

Der Erfindung liegt deshalb die Aufgabe zugrunde, eine Ermittlung der Ladeposition von Containern auf mindestens einer Ladeplattform eines Zugfahrzeuges automatisch und ohne den Einsatz von Kamera-Systemen durchzuführen.

Zur Lösung der gestellten Aufgabe ist die Erfindung durch die technische Lehre des Anspruches 1 gekennzeichnet.

Wesentliches Merkmal der Erfindung ist, dass die Distanz zwischen dem Triebkopf des Zugfahrzeuges und dem Hebezeug des Kranes in Richtung der Längsachse des Gespanns ermittelt wird.

Damit kann eine eindeutige Aussage getroffen werden, an welcher Stelle das Hebezeug des Containerkrans den gerade erfassten Container auf der einen oder mehreren der Anhängerplattformen verladen hat.

Es wird demnach eine Verfahren zur Verfolgung mindestens eines Containers beschrieben, welcher von einem Anlandeplatz eines Hafenterminals und einem dort angeordneten Containerkran auf mindestens einen Anhänger einer Zugmaschine aufgeladen und zu einem Abladeplatz verbracht wird und dort mit einem weiteren Containerkran auf einem Absetzort abgestellt wird.

Zur Ermittlung der Position des auf- oder abgeladenen Containers auf einem der Anhänger der Zugmaschine findet eine Distanzermittlung zwischen der Zugmaschine und dem Containerkran statt.

Damit kann nun eindeutig festgestellt werden, ob der vom Hebezeug des Containerkrans beförderte Container auf der vorderen oder der hinteren Anhängerplattform abgesetzt wurde. Ebenfalls kann bei der Beladung einer einzigen Anhängerplattform festgestellt werden, an welcher Stelle dieser Anhängerplattform der Container abgesetzt wurde.

Die Ermittlung der Distanz kann entweder direkt mittels einer Distanzmessung oder indirekt durch die Bestimmung der Position von Kran und Triebkopf erfolgen.

In einer speziellen Ausführung wird ein Real Time Location System (RTLS) zur Distanzermittlung genutzt, dabei ergibt sich ein weiterer Vorteil dahingehend, dass die Fahrzeugidentifikation (Fahrzeug-ID) zusammen mit der Distanzmessung durchgeführt wird. Wenn die Distanzmessung nicht mit RTLS durchgeführt wird, kann für die Identifikation des Fahrzeugs eine geeignete andere Technologie (z.B. RFID, OCR) genutzt werden.

Wichtig für die Erfindung ist, dass die Messung der Distanz zum Zeitpunkt des Absetzens des Containers auf einen Absetzort erfolgt.

Die Container-ID wird dem System von der Kransteuerung oder von einem anderen hafenseitigen System übergeben.

Mit den gewonnenen Daten (Container-ID, Fahrzeug-ID, Distanz) kann ein verladener Container nun gezielt einer bestimmten Ladeposition auf dem Gespann zugeordnet werden.

Dies geschieht dadurch, dass die Distanz zwischen dem Triebkopf der Zugmaschine und dem Hebezeug zum Zeitpunkt des Absetzens des Containers bestimmt wird. Das Hebezeug befindet sich hierbei auf der Höhe der aktuellen Abstellposition auf der Ladefläche. Mit der ermittelten Distanz zwischen Hebezeug und Triebkopfwagen lässt sich somit die Position des verladenen Containers zu einer Position auf dem Anhänger der Zugmaschine zuordnen.

Nachdem mehrere Container auf die Anhängerplattformen umgeladen ("umgeschlagen") wurden, kann nun die Reihung der Container im Gespann ermittelt werden.

In einer weiteren Verfeinerung dieses Verfahrensschrittes kann nun auch festgestellt werden, ob auf der jeweiligen Anhängerplattform ein oder mehrere Container abgesetzt wurden. Ausgehend von einer Anhängerplattform, welche für zwei 20ft oder einen 40ft Container ausgelegt ist, lässt sich somit ermitteln, ob auf der Ladefläche z.B. noch Platz für einen weiteren 20ft Container ist.

Ein weiterer Vorteil besteht darin, dass das Verfahren nicht auf einen einzelnen Anhänger beschränkt ist. Das Verfahren lässt sich auf beliebige Gespanne mit mehreren Anhängern anwenden, solange eine Distanzmessung zwischen dem Kran und dem Zugfahrzeug möglich ist.

Damit wird nun erstmals eine eindeutige Ladezuordnung zwischen den auf der Anhängerplattform abgesetzten Containern und dem jeweiligen Gespann festgestellt. Es wird demnach ein Wert für die Ermittlung der Ladepositionierung der einzelnen Container auf dem jeweiligen Fahrzeug gebildet.

Dies geschieht in Form von Triple-Wertpaaren, die aus folgenden Werten bestehen:

$$\text{Container-ID (A) + Fahrzeug-ID + Distanz (A)}$$

oder wahlweise

$$\text{Container-ID (B) + Fahrzeug-ID + Distanz (B).}$$

Die oben genannten Triple-Werte beziehen auf den Anwendungsfall, dass eine Anhängerplattform A mit einem einzigen Container belegt wurde. Wird jedoch die das Gespann mit mehreren Containern belegt, werden dementsprechend mehrere Dreifach-Positionswerte erfasst und ausgewertet. Der Buchstabe B kennzeichnet die hintere Anhängerplattform

Nachdem nun mit dem erfindungsgemäßen Verfahren eindeutig die Belegung der Anhängerplattformen eines Zugfahrzeuges mit einem oder mehreren Containern festgestellt wurde, wird das Fahrzeug zu einem Abladplatz gefahren, wo mit einem dort angeordneten Containerkran die aufgeladenen Container auf einem Absetzort entladen werden.

Aufgrund der beim Aufladen gebildeten Werte pro Container kann nun beim Entladen des Gespanns die Distanzbestimmung wiederholt und der Container anhand eines Wertevergleichs aller Container des betreffenden Gespanns identifiziert werden.

Wichtig ist daher, dass am Abladekran ebenfalls die Distanz der Zugmaschine zum Hebezeug festgestellt wird, um eine eindeutige Zuordnung der verschiedenen beladenen Ladeflächen der Zugmaschine zum Hebezeug des Abladekrans zu ermöglichen.

Das Ergebnis der Distanzmessung wird mit dem vorher genannten Triple-Datensatz vom hafenseitigen Containerkran verglichen. Wenn eine annähernde Übereinstimmung zwischen den Distanzen festgestellt wurde, ist somit bekannt, dass sich genau der Container X auf dem Gespann im Bereich des Hebezeuges des abladeseitigen Krans befindet.

Auf diese Weise ist der Container, der gerade mit dem Hebezeug erfasst wird, eindeutig identifiziert.

Damit kann ein Container automatisch verfolgt werden, und es ist kein Eingriff des Kranführers mehr notwendig, der evtl. mit manueller Eingabe Buch führen muss, welchen Container er an welcher Stelle abgeladen hat.

Eine weitere vorteilhafte Ausführungsform liegt darin, dass eine automatische Verfolgung der Container gewährleistet ist. Dies ist besonders wichtig, wenn die Container von einem ladeseitigen Kran auf ein Zugfahrzeug geladen werden und von diesem Zugfahrzeug zu einem abladeseitigen Kran transportiert werden.

Die Identifizierung der Container selbst, das heißt die Erfassung der Eindeutigen Nummer des Containers, erfolgt nach dem Stand der Technik. Dies kann z.B. manuell oder mit OCR-Erkennung erfolgen.

Wichtig bei der Erfindung ist demzufolge, dass eine automatisierte Verfolgung von am Hafen angelandeten Containern und deren Verbringung auf eine Abladefläche erfolgt, was mit wesentlich geringeren Fehlerquellen behaftet ist, weil ein manueller Eingriff nicht mehr erforderlich ist.

Das erfindungsgemäße Verfahren funktioniert selbstverständlich auch umgekehrt, nämlich, dass ein Container mit einem ladeseitigen Kran von einer Abstellfläche auf ein Zugfahrzeug aufgeladen wird, und vom Zugfahrzeug mit einem oder mehreren Ladeplattformen zu einem Hafenkran gebracht werden, der zur Beladung eines Schiffes vorgesehen ist. Zusätzlich funktioniert das Verfahren auch zwischen zwei Hafenkränen oder zwei landseitigen Kränen.

Die Distanzbestimmung zwischen dem Triebkopf und dem Hebezeug kann über verschiedene bekannte direkte oder indirekte Verfahren erfolgen, wie zum

Beispiel ein Real-Time Location System (RTLS) oder eine Positionsbestimmung mittels Sattelitennavigationssystem (GNSS).

Vorteil der Erfindung ist, dass lediglich der Triebkopf eines aus mehreren Ladeplattformen bestehenden Gespanns identifiziert werden muss. Die einzelnen Ladeplattformen oder Anhängern müssen keiner eigenen Infrastruktur zugeordnet werden.

Ein Vorteil der Erfindung ist, dass sie auf optische Bildvergleiche zwischen einem unter einem Ladekran stehenden Zuggespann und dem Hebezeug, verzichtet.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

Figur 1:    Draufsicht auf einen Hafenterminal

Figur 2:    Darstellung der Messpunkte am Hebezeug und am Triebkopf

Figur 3:    Blockschaltbild der Verbindung eines RTLS-Systems mit der Kransteuerung und einem hafenseitigen Verwaltungssystem CTAS

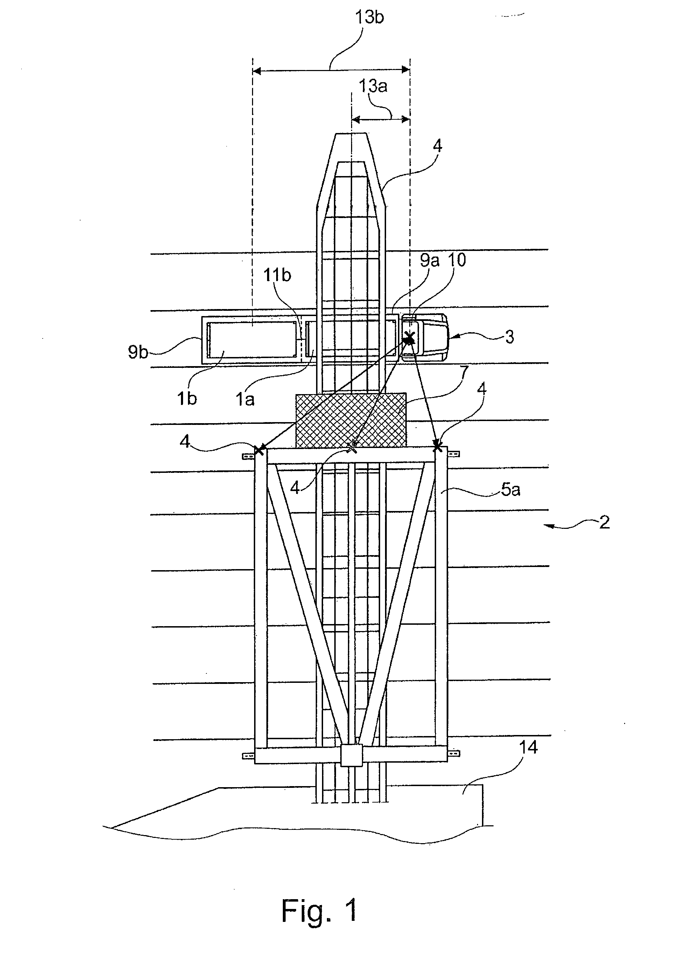

Mit der Figur 1 ist ein Hafenterminal 2 in Draufsicht dargestellt. Es werden Container 1 zwischen mindestens zwei Transportmitteln umgeschlagen.

Bei der Verladung von Containern 1 wird ein Containerkran 5a verwendet. Dies kann beispielsweise eine Containerbrücke sein. Hierbei transportiert eine von einem Brückenfahrzeugführer bedientes Hebezeug 7 den Container 1 von einem Schiff zum Hafenterminal 2. Dort wird der Container 1 an ein Fahrzeug (Gespann) 3 übergeben und von diesem zu einem Ablageplatz 6 oder einer anderen Transportvorrichtung transportiert. Der Transport der Container 1 vom Containerkran 5 zum Abladeplatz 6 erfolgt mit einer Zugmaschine 3. und einem oder mehreren dort gekuppelten Anhängern 8a, 8b.

Im hier aufgeführten Beispiel findet ein Umschlagen mindestens eines Containers 1a, 1b zwischen einem Schiff 14 und einem Zugfahrzeug bzw. Gespann statt. Das Zugfahrzeug 3 besteht hierbei aus einem Triebkopf 10 und mindestens einem Anhänger 8a, 8b. Der Triebkopf 10 ist als motorbetriebenes Zugfahrzeug ausgebildet, an welches die Anhänger 8a, 8b hintereinander angehängt werden.

Zur Ermittlung der Position des auf- oder abgeladenen Containers (1a, 1b) auf einem der Anhänger (8a, 8b, 9a, 9b) der Zugmaschine (3) findet eine Distanzermittlung (13, 13a, 13b) zwischen der Zugmaschine (3) und dem Containerkran (5a, 5b) statt.

In dem dargestellten Beispiel erfolgt die Ermittlung der Distanz 13 über die Distanzmessung zwischen dem Triebkopf 10 und den kranseitigen Distanzpunkten 4 mit einem RTLS-System. Nachdem eine Triangulationsmessung durchgeführt wird, sind mehrere voneinander beabstandete Distanzmesspunkte 4 vorgesehen.

Am Hebezeug oder am Containerkran 5a, 5b sind mindestens gleich viele Distanzmesspunkt 4 angeordnet, wie für die Ermittlung der Distanz 13 zur Zugmaschine oder dem Triebkopf 10 benötigt werden.

Das Anheben des Containers 1 erfolgt durch die Hebevorrichtung 7, welche den Container 1 mittig greift. Dadurch ist eine feste Position des Containers 1a, 1b innerhalb des Hebezeugs 7 gegeben. Erfindungsgemäß ist damit eine eindeutige Ladezuordnung der Container 1 a, 1b auf den jeweiligen Anhängerplattform 9a und 9b gegeben. Auch wenn die Anhängerplattformen 9 mit mehreren Containern 1a, 1b belegt sind, ist eine eindeutige Ladezuordnung möglich.

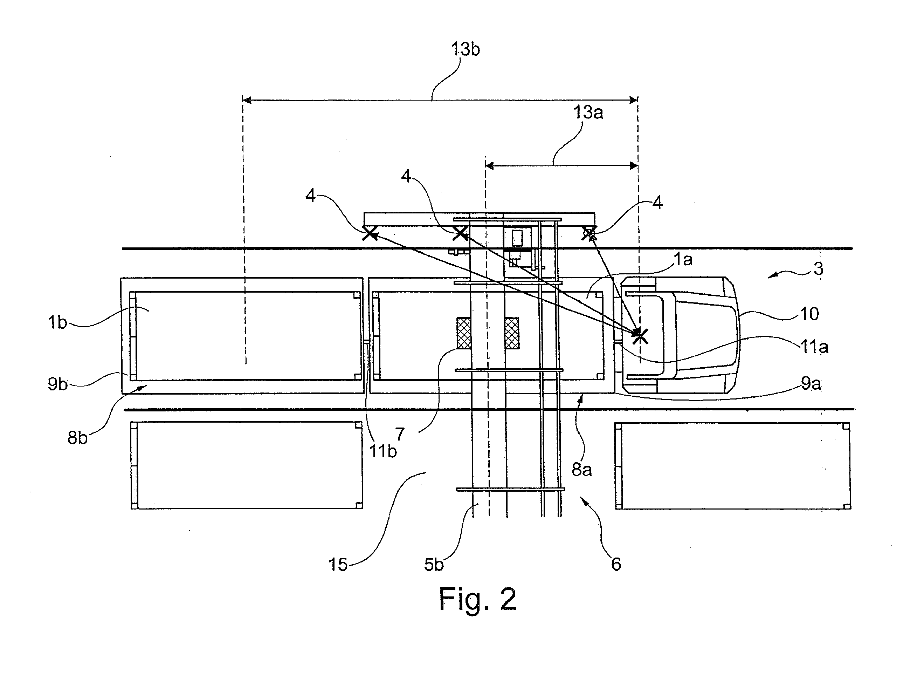

Figur 2 zeigt den Abladevorgang eines Containers von einer Zugmaschine 3 auf einem Abladeplatz 6. Hierfür wird Containerkran 5b verwendet.

Wichtig ist, dass am Containerkran 5b die gleiche Distanzermittlung 13 wie am Containerkran 5a stattfindet. Es findet somit eine Distanzmessung und anschließende Berechnung der Distanz zwischen dem Triebkopf 10 und dem Kran bzw. dem Hebezeug 7 statt.

Bei der zweiten Berechnung werden die Daten mit den vorher gespeicherten Distanzdaten vom aufladeseitigen Containerkran 5a der Container 1 a, 1 b am Gespann verglichen.

So wird eine eindeutige Zuordnung der verladenen Container 1 a, 1b zu den verschiedenen Ladeflächen der Zugmaschine 3 möglich. Anhand des beim ersten Umschlagen gebildeten Wertes ist es nun möglich, den gewünschten Container 1 a, 1 b am Gespann zu identifizieren und zum Entladen auszuwählen.

**EP 2 711 326 A1**

Demnach wird zur Ermittlung der Position des auf- oder abgeladenen Containers 1a, 1b auf einem der Anhänger 8a, 8b, 9a, 9b der Zugmaschine 3 der beim Aufladen gebildete erste Wert 16 des aufgeladenen Containers 1 a, 1 b auf einem der Anhänger 8a, 8b, 9a, 9b der Zugmaschine 3 mit dem beim Abladen gebildeten zweiten Wert 17 verglichen, um so bei annähernder Übereinstimmung beider Werte 16, 17 eine Individualisierung des Containers 1 a, 1 b zu erreichen.

Eine annähernde Übereinstimmung ist schon dann gegeben, wenn der Unterschied der beiden Distanzmessungen nicht die halbe Länge einer Containers überschreitet, weil das Hebezeug in der Arbeitsposition stets mittig zum Container 1 a, 1 b ausgerichtet ist.

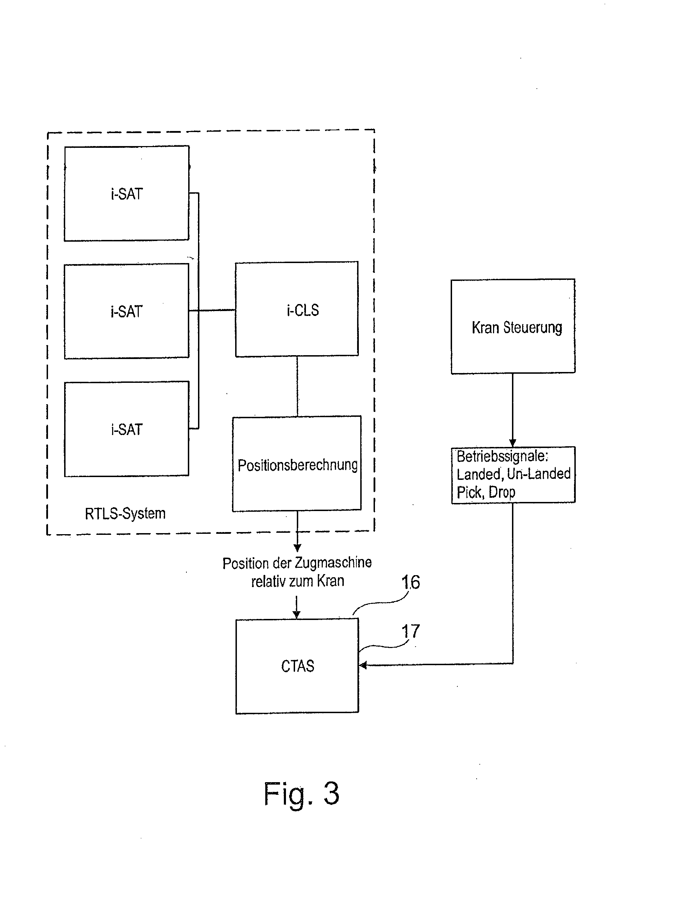

Aus dem Blockschaltbild der Figur 3 gehen weitere Einzelheiten der Erfindung hervor.

Durch ein Real-time-Ortungssystem (RTLS) wird die Position der Zugmaschine 3 relativ zum Containerkran 5a, 5b bzw. Hebezeug 7 bestimmt. Diese Daten werden dem hafenseitigen Container-Terminal-Automation-System (CTAS) zugeführt. Seitens der Kran-Steuerung fließen die Informationen über die Betriebssignale wie z.B. Container ID, Landed, Un-Landed, Pick und Drop dem CTAS zu und werden zur Identifizierung und Ortung einzelner Container 1a, 1b verwendet.

Wichtig ist, dass die Distanzmessung nicht auf die Distanzmessung zwischen dem Kran 5 und dem Triebkopf 10 beschränkt ist. Es sind ebenso auch andere Distanzen möglich, mit denen die Position des Containers auf der Zugmaschine ermittelt werden kann. So kann beispielsweise auch eine Distanz zwischen den Distanzmesspunkten 4 am Containerkran und einem Punkt im hinteren Bereich des ersten Anhängers oder am Ende der Zugmaschine 3 ermittelt werden.

Die kranseitigen Distanzmesspunkte 4 können bei der vorliegenden Erfindung sowohl am Rahmen des Kranes 5, als auch am Hebezeug 7, oder einem anderen Punkt am Kran angeordnet sein.

Der für den jeweiligen Container zu bestimmende container-individuelle Wert 16 wird in der CTAS ermittelt. Der Wer 16 ergibt sich aus den oben beschriebenen Daten.

Wesentlicher Vorteil der Erfindung ist, dass eine Distanzmessung zwischen dem Kran und dem Triebkopf eines mehrteiligen Fahrzeuges ausreicht, um eine Standortposition und Verfolgung eines Containers beim Umschlagen zu bestimmen.

**Zeichnungslegende**

1    Container (a, b)

2    Hafenterminal

3    Zugmaschine

4    Distanzmesspunkt

5    Containerkran (5a, 5b)

6    Abladeplatz

7    Hebezeug

8a    vordere Anhänger

8b    hintere Anhänger

9a    vordere Anhängerplattform

9b    hintere Anhängerplattform

10    Triebkopf bzw. Zugmaschine

11a    vordere Anhängerkupplung

11b    hintere Anhängerkupplung

5

12

13    Distanzermittlung

13a   Distanz zum vorderen Anhänger 8a

13b   Distanz zum hinteren Anhänger 8b

14    Schiff

15    Absetzort

16    Wert

17    Wert


**Patentansprüche**

1.  Verfahren zur Verfolgung mindestens eines Containers (1a, 1 b), welcher von einem Anlandeplatz eines Hafenterminals (2) und einem dort angeordneten Containerkran (5a) auf mindestens einen Anhänger (8a, 8b) einer Zugmaschine (3) aufgeladen und zu einem Abladeplatz (6) verbracht wird und dort mit einem weiteren Containerkran (5b) auf einem Absetzort (15) abgestellt wird, **dadurch gekennzeichnet, dass** zur Ermittlung der Position des auf- oder abgeladenen Containers (1a, 1b) auf einem der Anhänger (8a, 8b, 9a, 9b) der Zugmaschine (3) eine Distanzermittlung (13, 13a, 13b) zwischen der Zugmaschine (3) und dem Containerkran (5a, 5b) stattfindet.

2.  Verfahren nach Anspruch 1, **dadurch gekennzeichnet, dass** die Distanz (13) indirekt über die Messung der Distanz zwischen der Zugmaschine (3) und einem Distanzmesspunkt (4) ermittelt wird.

3.  Verfahren nach Anspruch 1 oder 2, **dadurch gekennzeichnet, dass** die Distanzmessung zwischen einem Triebkopf (10) der Zugmaschine (3) und dem Hebezeug (7) des Krans (5) stattfindet.

4.  Verfahren nach einem der Ansprüche 1 bis 3, **dadurch gekennzeichnet, dass** aus der ermittelten Distanz (13), der Zugmaschinen-Identifikation und der Container-Identifikation ein individueller Wert (16) für den jeweiligen Container (1) bestimmt wird.

5.  Verfahren nach Anspruch 4, **dadurch gekennzeichnet, dass** der unter anderem die Distanz (13a, 13b) enthaltende Wert (16) den Absetzort (15) des Containers (1) auf einer oder mehreren Anhängerplattformen (9a, 9b) des Zugfahrzeuges (3) identifiziert.

6.  Verfahren nach einem der Ansprüche 1 bis 5, **dadurch gekennzeichnet, dass** am Abladeplatz (6, 15) der die Position des Containers (1a, 1b) enthaltende Wert (16) für eine Identifikation des Containers (1) genutzt wird.

7.  Verfahren nach einem der Ansprüche 1 bis 6, **dadurch gekennzeichnet, dass** zur Distanzermittlung (13) ein RTLS-System, ein Ultraschallsystem oder ein optisches Distanzmessverfahren verwendet wird.

8.  Verfahren nach einem der Ansprüche 1 bis 7, **dadurch gekennzeichnet, dass** am Absetzort (6, 15) des Containers (1a, 1b) eine weitere Distanzermittlung (13) durchgeführt wird, welche zusammen mit der Container-Identifikation ein Wert (17) bildet.

9.  Verfahren nach einem der Ansprüche 1 bis 8, **dadurch gekennzeichnet, dass** zur Ermittlung der Position des auf- oder abgeladenen Containers (1 a, 1 b) auf einem der Anhänger (8a, 8b, 9a, 9b) der Zugmaschine der erste Wert (16) des aufgeladenen Containers (1a, 1 b) auf einem der Anhänger (8a, 8b, 9a, 9b) der Zugmaschine (3) mit dem beim Abladen gebildeten zweiten Wert (17) verglichen wird und bei annähernder Übereinstimmung beider Werte (16, 17) eine Individualisierung des Containers (1 a, 1 b) erfolgt.

10. Verfahren nach einem der Ansprüche 1 bis 9, **dadurch gekennzeichnet, dass** die Distanzermittlung (13) während des Auflade- und/oder Abladevorgang des Containers (1) erfolgt.

Fig. 1

Fig. 2

```
┌─────────────────────────────────────────────┐
│  ┌──────────┐                                │
│  │  i-SAT   │                                │
│  └──────────┘                                │
│                                              │
│  ┌──────────┐        ┌──────────┐            │
│  │  i-SAT   │────────│  i-CLS   │            │
│  └──────────┘        └──────────┘            │
│                                              │
│  ┌──────────┐        ┌──────────────┐        │
│  │  i-SAT   │        │Positions-    │        │
│  └──────────┘        │berechnung    │        │
│                      └──────────────┘        │
│  RTLS-System                                 │
└─────────────────────────────────────────────┘
```

Kran Steuerung

Betriebssignale:
Landed, Un-Landed
Pick, Drop

Position der Zugmaschine
relativ zum Kran

16

17

CTAS

## Fig. 3

Europäisches Patentamt

European Patent Office

Office européen des brevets

## EUROPÄISCHER RECHERCHENBERICHT

Nummer der Anmeldung

EP 13 00 4324

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 964 806 A1 (KALMAR IND OY AB [FI] CARGOTEC FINLAND OY [FI]) 3. September 2008 (2008-09-03) * das ganze Dokument * ----- | 1-10 | INV. B66C19/00 |
| X | US 2011/017693 A1 (THOMAS PATRICK [US] ET AL) 27. Januar 2011 (2011-01-27) * das ganze Dokument * ----- | 1-10 | |

RECHERCHIERTE SACHGEBIETE (IPC)

B66C

Der vorliegende Recherchenbericht wurde für alle Patentansprüche erstellt

| Recherchenort | Abschlußdatum der Recherche | Prüfer |
|---|---|---|
| Den Haag | 17. Dezember 2013 | Faymann, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

EP 2 711 326 A1

**ANHANG ZUM EUROPÄISCHEN RECHERCHENBERICHT**
**ÜBER DIE EUROPÄISCHE PATENTANMELDUNG NR.**

EP 13 00 4324

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-12-2013

| Im Recherchenbericht angeführtes Patentdokument | Datum der Veröffentlichung | Mitglied(er) der Patentfamilie | Datum der Veröffentlichung |
|---|---|---|---|
| EP 1964806 A1 | 03-09-2008 | CN 101269751 A<br>EP 1964806 A1<br>HK 1120252 A1<br>SG 145624 A1 | 24-09-2008<br>03-09-2008<br>30-08-2013<br>29-09-2008 |
| US 2011017693 A1 | 27-01-2011 | KEINE | |

EPO FORM P0461

Für nähere Einzelheiten zu diesem Anhang : siehe Amtsblatt des Europäischen Patentamts, Nr.12/82